# EUROPÄISCHE PATENTSCHRIFT

(11) **EP 1 193 377 B1**
(45) Veröffentlichungstag und Bekanntmachung des Hinweises auf die Patenterteilung: **25.02.2004**
(21) Anmeldenummer: 01117074.3
(22) Anmeldetag: 13.07.2001
(51) Int. Cl.: F02B 75/20, F02B 75/06, F16F 15/26

(54) **Brennkraftmaschine**
Internal combustion engine
Moteur à combustion interne

(30) Priorität: 27.09.2000 DE 10047820
(43) Veröffentlichungstag der Anmeldung: 03.04.2002
(73) Patentinhaber: Volkswagen Aktiengesellschaft, 38436 Wolfsburg (DE)
(72) Erfinder: Koehler, Otto, Dr., 38120 Braunschweig (DE); Tremper, Karsten, 38106 Braunschweig (DE)

(56) Entgegenhaltungen:
- DE-A- 3 120 190
- US-A- 779 727
- US-A- 5 927 242
- PATENT ABSTRACTS OF JAPAN vol. 006, no. 010 (M-107), 21. Januar 1982 (1982-01-21) & JP 56 131853 A (DAIHATSU MOTOR CO LTD), 15. Oktober 1981 (1981-10-15)

## Beschreibung

Die Erfindung betrifft eine Brennkraftmaschine, insbesondere für ein Kraftfahrzeug, mit zwei in einem Zylinderkurbelgehäuse ausgebildeten Arbeitszylindern, in denen jeweilige Arbeitskolben oszillieren, die mit jeweiligen Kurbelkröpfungen einer Kurbelwelle verbunden sind, gemäß dem Oberbegriff des Anspruchs 1.

Brennkraftmaschinen mit lediglich zwei Arbeitszylinder bilden eine kostengünstige Alternative für Einsatzgebiete, wo keine großen Leistungen erforderlich sind, beispielsweise in kleinen Kraftfahrzeugen, die einen möglichst niedrigen Kraftstoffverbrauch haben sollen. Ein entscheidender Nachteil von derartigen Zweizylinder-Brennkraftmaschinen ist jedoch ihr unruhiger Lauf. Dieser kann zwar durch entsprechende Ausgleichswellen in gewissen Grenzen reduziert werden, jedoch erhöht dies entsprechende Herstellungs- und Montagekosten erheblich, so daß ggf. eine Brennkraftmaschine mit mehr als zwei Zylindern wirtschaftlicher ist.

Aus der DE 44 31 798 A1 ist es zur kostengünstigen Herstellung einer Brennkraftmaschine für Kraftfahrzeuge bekannt, aus einer hochzylindrigen Brennkraftmaschine eine niedrigzylindrige Brennkraftmaschine dadurch abzuleiten, daß wenigstens einer der Zylinderräume ohne Kolben, Kolbenstange und ohne Ein/Auslaßventile ausgestattet ist. Ein Kräfteausgleich ist jedoch nicht beschrieben.

Die DE 44 43 707 A1 beschreibt eine schwingungsarme Dreizylinder-Brennkraftmaschine, bei der die Abmessungen des mittleren Kolbens etwa der Summe der Abmessungen der äußeren Kolben entsprechen, so daß die gleichen Massen- und Gasdruckkräfte wie bei einer Vierzylinder-Brennkraftmaschine, jedoch bei wesentlich verringerter Längenabmessung der Maschine, erhalten werden. Es bleibt jedoch ausdrücklich bei einer Dreizylinder-Brennkraftmaschine, so daß ein Kräfteausgleich für eine Zweizylinder-Brennkraftmaschine nicht beschrieben ist.

Der vorliegenden Erfindung liegt die Aufgabe zugrunde, eine kostengünstige Brennkraftmaschine mit zwei Zylindern, beispielsweise für kleine Kraftfahrzeuge, zur Verfügung zu stellen, welche gleichzeitig einen akzeptablen Laufkomfort bietet.

Diese Aufgabe wird erfindungsgemäß durch eine Brennkraftmaschine der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß das Zylinderkurbelgehäuse mit drei bzgl. ihrer Dimensionen identischen, in Reihe angeordneten Zylindern ausgebildet ist, wobei die äußeren Zylinder die beiden Arbeitszylinder ausbilden, in denen jeweilige Arbeitskolben im Gleichtakt oszillieren, wobei ferner in dem mittleren Zylinder ein Ausgleichsgewicht im Gegentakt zu den Arbeitszylindern oszilliert, und wobei der Kolben geometrisch derart ausgebildet ist, daß er ohne Verdichtungsarbeit zu leisten in dem mittleren Zylinder oszilliert.

Dies hat den Vorteil, daß bei einer Zweizylinder-Brennkraftmaschine ohne zusätzliche Ausgleichswelle ein oszillierender Kräfteausgleich 1. Ordnung erzielt wird, wobei gleichzeitig ein herkömmliches Zylinderkopfrohteil eines Dreizylindermotors verwendet werden kann, bei dem der mittlere Zylinder nicht befeuert wird. Dies vereinfacht Herstellung und Montage, da ein bereits fertiges Serienteil zum Einsatz kommt.

Für einen möglichst kräftefreien Lauf der Ausgleichsmasse mit niedrigen mechanischen Verlusten ist an einer Außenfläche der Ausgleichsmasse, welche einer Innenfläche des mittleren Zylinders zugewandt ist, und/oder an der Innenfläche des Zylinders, die der Außenfläche der Ausgleichsmasse zugewandt ist, wenigstens eine reibungsmindernde Beschichtung angeordnet.

Zweckmäßigerweise sind Ein- und Auslaßkanäle des mittleren Zylinders verschlossen und bei einem Ventiltrieb der Brennkraftmaschine Ventilbetätigungsmittel für den mittleren Zylinder ausgespart.

Für einen entsprechenden Kräfteausgleich entspricht die Masse des Ausgleichgewichtes der Summe der oszillierenden Massen der Arbeitszylinder.

In einer bevorzugten Ausführungsform liegen entsprechende Kröpfungen der Kurbelwelle in einer Ebene, wobei die den Arbeitskolben zugeordneten, äußeren Kröpfungen identische Winkellage aufweisen und die zwischen diesen angeordnete mittlere Kröpfung zu den äußeren Kröpfungen um 180° versetzt ist, wobei die Ausgleichsmasse mit der mittleren Kröpfung verbunden ist.

Die Ausgleichsmasse ist aus Eisen und/oder Stahl hergestellt.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform einer erfindungsgemäßen Brennkraftmaschine in schematischer Schnittansicht,
- Fig. 2: eine Ausgleichsmasse der Brennkraftmaschine von Fig. 1 in perspektivischer Ansicht,
- Fig. 3: eine Ansicht von oben auf die Ausgleichsmasse von Fig. 2,
- Fig. 4: eine Schnittansicht entlang Linie A-A von Fig. 3 und
- Fig. 5: eine Schnittansicht entlang Linie B-B von Fig. 3.

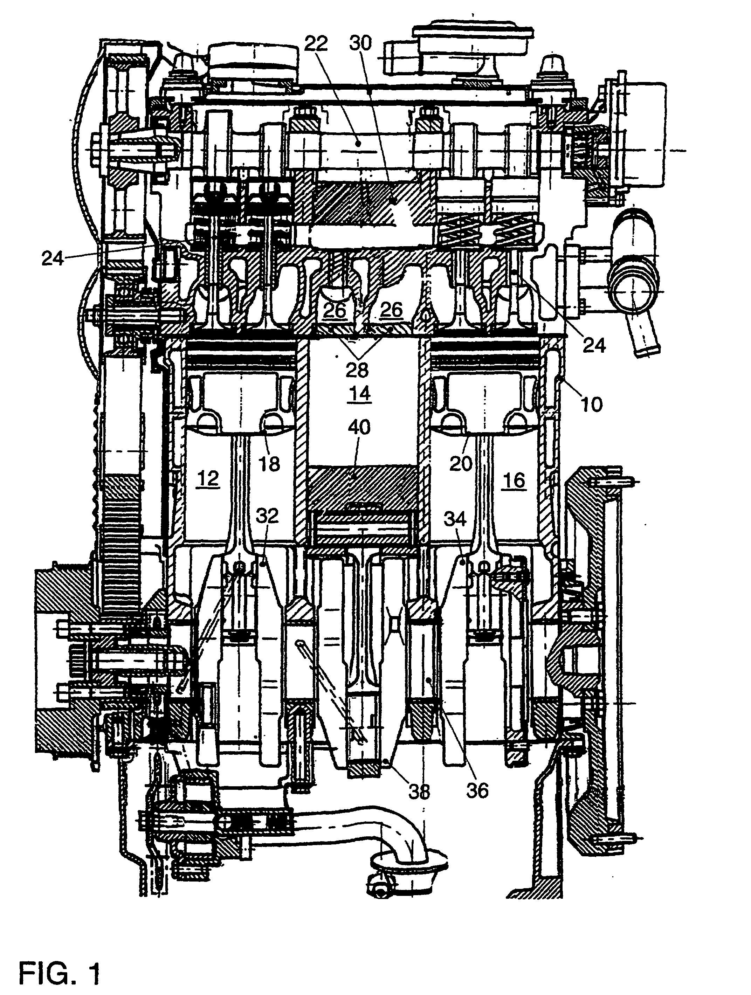

Die in Fig. 1 dargestellte, bevorzugte Ausführungsform einer erfindungsgemäßen Zweizylinder-Brennkraftmaschine umfaßt ein Zylinderkurbelgehäuse 10 einer Dreizylinder-Brennkraftmaschine mit drei in Reihe angeordneten und in ihren Dimensionen identischen Zylindern 12, 14 und 16. Hierbei bilden die äußeren Zylinder 12 und 16 Arbeitszylinder, in denen jeweils ein Arbeitskolben 18 und 20 oszilliert. Eine Nockenwelle 22 betätigt entsprechende Ventile 24 der beiden äußeren Zylinder 12 und 16. Der mittlere Zylinder 14 ist nicht befeuert und es sind keine Ventile vorgesehen. Ebenso sind entsprechende Ventilbetätigungsmittel ausgespart, indem die Nockenwelle 22 im Bereich des mittleren Zylinders 14 keine Nocken aufweist. Entsprechende Ein- bzw. Auslaßkanäle 26 sowie Ventilsitze des mittleren Zylinders 14 sind durch eingepreßte Deckel 28 verschlossen. Bezugsziffer 30 bezeichnet eine Nockenwellenlagerbank.

Die Arbeitskolben 18 und 20 sind über entsprechende Kröpfungen 32, 34 mit einer Kurbelwelle 36 verbunden. Diese Kröpfungen 32 und 34 haben dabei gleiche Winkellage, so daß die beiden Arbeitskolben 18 und 20 im Gleichtakt in den Arbeitszylindern 12 und 16 oszillieren. Auch deren Zündabstände sind gleich, in der Art eines Twin-Zweizylinder-Motors.

Eine mittlere Kröpfung 38 der Kurbelwelle 36 ist bzgl. den Kröpfungen 32 und 34 um 180° versetzt, wobei alle Kröpfungen 32, 34, 38 in einer Ebene liegen. Mit der mittleren Kröpfung 38 ist ein Ausgleichsgewicht 40 derart verbunden, daß dieses in dem mittleren Zylinder 14 oszilliert und zwar bzgl. den Arbeitskolben 18, 20 im Gegentakt. Das Ausgleichsgewicht 40 ist derart ausgebildet, daß es keine Verdichtungsarbeit leistet und sich möglichst verlustfrei in dem mittleren Zylinder 14 bewegt. Hierzu ist ein nicht dargestellter, reibungsmindemder Belag zwischen der Ausgleichsmasse 40 und einer Innenwandung des mittleren Zylinders 14 vorgesehen. Femer weist das Ausgleichsgewicht eine oszillierende Masse auf, die der Summe der oszillierenden Massen der Arbeitskolben 18, 20 entspricht.

Dies alles erzielt insgesamt einen Kräfteausgleich 1. Ordnung, was zu einem entsprechend ruhigeren Lauf der Zweizylinder-Brennkraftmaschine führt, wobei hierzu keine zusätzlichen Ausgleichswellen erforderlich sind. Auch ein neues Bauteil für das Zylinderkurbelgehäuse ist nicht erforderlich, denn es kann ein herkömmliches Serienbauteil einer Dreizylinder-Brennkraftmaschine verwendet werden.

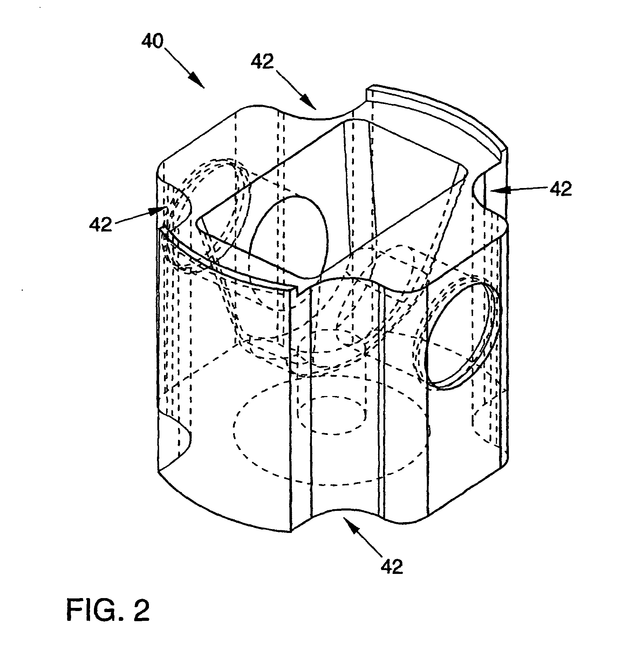

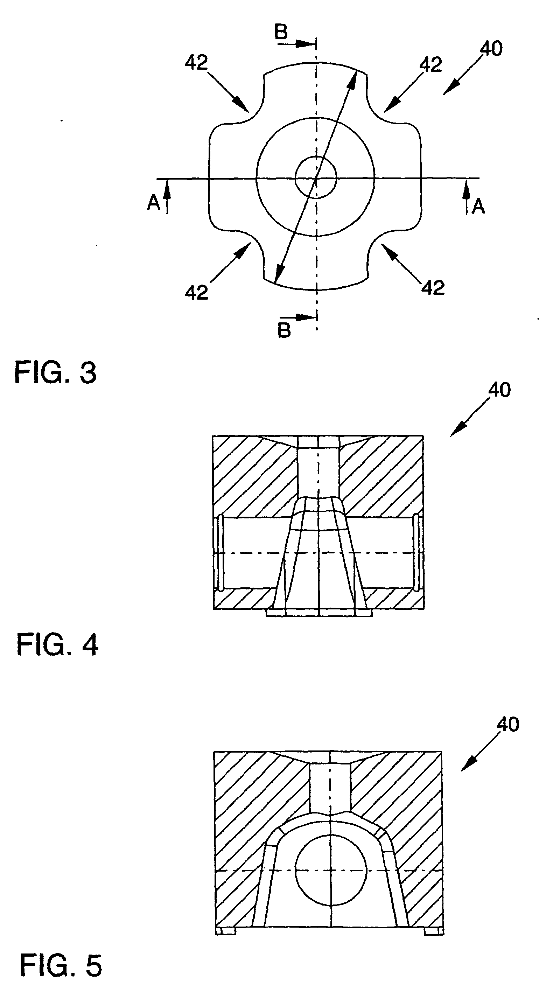

Die Fig. 2 bis 5 veranschaulichen eine beispielhafte Ausführungsform eines Ausgleichgewichtes 40 in Form eines Kolbens. Dieser Kolben weist an seinem Umfang Einziehungen 42 auf, die entlang der gesamten Längserstreckung des Kolbens 40 ausgebildet sind. Hierdurch kann ein in dem mittleren Zylinder 14 vorhandenes Fluid ungehindert am Kolben 40 vorbei strömen, während dieser im mittleren Zylinder 14 oszilliert. Dadurch muß das Ausgleichsgewicht 40 keine Verdichtungsarbeit leisten, die in diesem Fall des nicht befeuerten mittleren Zylinders ein reiner Verlust wäre.

Im Ergebnis läßt sich mit der Erfindung beispielsweise ein kostengünstiger Dieselmotor mit hohem Laufkomfort für kleine Fahrzeuge ohne kostenintensive, rotierende Ausgleichswellen erzielen.

## Patentansprüche

1. Brennkraftmaschine, insbesondere für ein Kraftfahrzeug, mit zwei in einem Zylinderkurbelgehäuse (10) ausgebildeten Arbeitszylindern, in denen jeweilige Arbeitskolben (18, 20) oszillieren, die mit jeweiligen Kurbelkröpfungen (32, 34) einer Kurbelwelle (36) verbunden sind, **dadurch gekennzeichnet, daß** das Zylinderkurbelgehäuse (10) mit drei bzgl. ihrer Dimensionen identischen, in Reihe angeordneten Zylindern (12, 14, 16) ausgebildet ist, wobei die äußeren Zylinder (12, 16) die beiden Arbeitszylinder ausbilden, in denen jeweilige Arbeitskolben (18, 20) im Gleichtakt oszillieren, wobei ferner in dem mittleren Zylinder (14) ein Ausgleichsgewicht (40) im Gegentakt zu den Arbeitszylindern (18, 20) oszilliert, und wobei der Kolben (40) geometrisch derart ausgebildet ist, daß er ohne Verdichtungsarbeit zu leisten in dem mittleren Zylinder (14) oszilliert.

2. Brennkraftmaschine nach Anspruch 1, **dadurch gekennzeichnet, daß** das Ausgleichsgewicht (40) als Kolben ausgebildet ist.

3. Brennkraftmaschine nach wenigstens einem der vorhergehenden Ansprüche, **dadurch gekennzeichnet, daß** an einer Außenfläche der Ausgleichsmasse (40), welche einer Innenfläche des mittleren Zylinders (14) zugewandt ist, und/oder an der Innenfläche des mittleren Zylinders (14), die der Außenfläche der Ausgleichsmasse (40) zugewandt ist, wenigstens eine reibungsmindernde Beschichtung angeordnet ist.

4. Brennkraftmaschine nach wenigstens einem der vorhergehenden Ansprüche, **dadurch gekennzeichnet, daß** Ein- und Auslaßkanäle (26) des mittleren Zylinders (14) verschlossen sind und bei einem Ventiltrieb (22) der Brennkraftmaschine Ventilbetätigungsmittel für den mittleren Zylinder (14) ausgespart sind.

5. Brennkraftmaschine nach wenigstens einem der vorhergehenden Ansprüche, **dadurch gekennzeichnet, daß** die Masse des Ausgleichgewichtes (40) der Summe der oszillierenden Massen der Arbeitszylinder (18, 20) entspricht.

6. Brennkraftmaschine nach wenigstens einem der vorhergehenden Ansprüche, **dadurch gekennzeichnet, daß** entsprechende Kröpfungen (32, 34, 38) der Kurbelwelle (36) in einer Ebene liegen, wobei die den Arbeitskolben (18, 20) zugeordneten, äußeren Kröpfungen (32, 34) identische Winkellage aufweisen und die zwischen diesen angeordnete mittlere Kröpfung (38) zu den äußeren Kröpfungen (32, 34) um 180° versetzt ist, wobei die Ausgleichsmasse (40) mit der mittleren Kröpfung (38) verbunden ist.

7. Brennkraftmaschine nach wenigstens einem der vorhergehenden Ansprüche, **dadurch gekennzeichnet, daß** die Ausgleichsmasse (40) aus Eisen und/oder Stahl hergestellt ist.

## Claims

1. Internal combustion engine, in particular for a motor vehicle, with two working cylinders which are formed in a cylinder crankcase (10) and in which oscillate respective working pistons (18, 20) which are connected to respective crank bends (32, 34) of a crankshaft (36), **characterized in that** the cylinder crankcase (10) is designed with three cylinders (12, 14, 16) identical with respect to their dimensions and arranged in series, the outer cylinders (12, 16) forming the two working cylinders, in which respective working pistons (18, 20) oscillate in synchronism, furthermore a compensating weight (40) oscillating in the middle cylinder (14) in opposition to the working cylinders (18, 20), and the piston (40) being designed geometrically in such a way that it oscillates in the middle cylinder (14), without performing compression work.

2. Internal combustion engine according to Claim 1, **characterized in that** the compensating weight (40) is designed as a piston.

3. Internal combustion engine according to at least one of the preceding claims, **characterized in that** at least one friction-reducing coating is arranged on an outer face of the compensating mass (40) which confronts an inner face of the middle cylinder (14) and/or on the inner face of the middle cylinder (14) which confronts the outer face of the compensating mass (40).

4. Internal combustion engine according to at least one of the preceding claims, **characterized in that** inlet and outlet ducts (26) of the middle cylinder (14) are closed and, in the case of a valve drive (22) of the internal combustion engine, a clearance is provided for valve actuation means for the middle cylinder (14).

5. Internal combustion engine according to at least one of the preceding claims, **characterized in that** the mass of the compensating weight (40) corresponds to the sum of the oscillating masses of the working cylinders (18, 20).

6. Internal combustion engine according to at least one of the preceding claims, **characterized in that** corresponding bends (32, 34, 38) of the crankshaft (36) lie in one plane, the outer bends (32, 34) assigned to the working pistons (18, 20) having an identical angular position, and the middle bend (38) arranged between these being offset at 180° to the outer bends (32, 34), the compensating mass (40) being connected to the middle bend (38) .

7. Internal combustion engine according to at least one of the preceding claims, **characterized in that** the compensating mass (40) is produced from iron and/or steel.

## Revendications

1. Moteur à combustion interne, notamment pour un véhicule automobile, comprenant deux cylindres de travail réalisés dans un carter de cylindres moteur (10), dans lesquels oscillent des pistons de travail respectifs (18, 20), qui sont connectés à des coudes de vilebrequin respectifs (32, 34) d'un vilebrequin (36), **caractérisé en ce que** le carter de cylindres moteur (10) est réalisé avec trois cylindres de dimensions identiques (12, 14, 16) disposés en rangée, les cylindres extérieurs (12, 16) constituant les deux cylindres de travail, dans lesquels des pistons de travail respectifs (18, 20) oscillent en synchronisme, un poids d'équilibrage (40) oscillant en outre dans le cylindre central (14) de manière symétrique par rapport aux cylindres de travail (18, 20), et le piston (40) étant réalisé avec une forme géométrique telle qu'il oscille sans fournir de travail de compression dans le cylindre central (14).

2. Moteur à combustion interne selon la revendication 1, **caractérisé en ce que** le poids d'équilibrage (40) est réalisé en tant que piston.

3. Moteur à combustion interne selon au moins l'une quelconque des revendications précédentes, **caractérisé en ce que** sur une face extérieure de la masse d'équilibrage (40), qui est tournée vers une face interne du cylindre central (14), et/ou sur la face interne du cylindre central (14), qui est tournée vers la face extérieure de la masse d'équilibrage (40), on prévoit au moins un revêtement réduisant les frottements.

4. Moteur à combustion interne selon au moins l'une quelconque des revendications précédentes, **caractérisé en ce que** des canaux d'entrée et de sortie (26) du cylindre central (14) sont fermés et lors d'une commande des soupapes (22) du moteur à combustion interne, des moyens d'actionnement des soupapes pour le cylindre central (14) sont omis.

5. Moteur à combustion interne selon au moins l'une quelconque des revendications précédentes, **caractérisé en ce que** la masse du poids d'équilibrage (40) correspond à la somme des masses oscillantes des cylindres de travail (18, 20) .

6. Moteur à combustion interne selon au moins l'une quelconque des revendications précédentes, **caractérisé en ce que** des coudes correspondants (32, 34, 38) du vilebrequin (36) se trouvent dans un plan, les coudes extérieurs (32, 34) associés aux pistons de travail (18, 20) présentant une position angulaire identique et le coude (38) central disposé entre ceux-ci étant décalé par rapport aux coudes extérieurs (32, 34) de 180°, la masse d'équilibrage (40) étant connectée au coude central (38).

7. Moteur à combustion interne selon au moins l'une quelconque des revendications précédentes,
**caractérisé en ce que** la masse d'équilibrage (40) est fabriquée en fer et/ou en acier.
